# EUROPEAN PATENT APPLICATION

(11) **EP 4 611 440 A1**
(43) Date of publication of application: **03.09.2025**
(21) Application number: 23888095.9
(22) Date of filing: 10.11.2023
(51) Int. Cl.: H04W 52/02

(54) **MULTI-LINK DEVICE COMMUNICATION METHOD AND COMMUNICATION DEVICE**

(30) Priority: 10.11.2022 CN 202211403130
(71) Applicant: Huawei Technologies Co., Ltd., Shenzhen, Guangdong 518129 (CN)
(72) Inventor: GUO, Yuchen, Shenzhen, Guangdong 518129 (CN); GAN, Ming, Shenzhen, Guangdong 518129 (CN); LI, Yunbo, Shenzhen, Guangdong 518129 (CN)
(74) Representative: Körber, Martin Hans
(86) International application number: PCT/CN2023/130869
(87) International publication number: WO 2024/099410

(57) **Abstract**

This application relates to a multi-link device communication method and a communication device. In this method, a station multi-link device sends a first WUR setup request frame to an access point multi-link device, to request setup of a WUR mode, where the first WUR setup request frame includes information about a first link set, and the first link set includes one or more links requested to be woken up in the WUR mode; and the access point multi-link device replies with a first WUR setup response frame, where the first WUR setup response frame indicates successful setup of the WUR mode, and the first WUR setup response frame includes indication information indicating a link allowed to be woken up in the WUR mode. According to the foregoing method, the station multi-link device and the access point multi-link device can determine, for a plurality of established links, which links can be woken up in the WUR mode, so that the access point multi-link device can flexibly wake up a specific link in the station multi-link device, thereby reducing power consumption for the station multi-link device.

## Description

### CROSS-REFERENCE TO RELATED APPLICATIONS

This application claims priority to Chinese Patent Application No. 202211403130.0, filed with the China National Intellectual Property Administration on November 10, 2022 and entitled "MULTI-LINK DEVICE COMMUNICATION METHOD AND COMMUNICATION DEVICE", which is incorporated herein by reference in its entirety.

### TECHNICAL FIELD

This application relates to the field of wireless communication, and in particular, to a multi-link device communication method and a communication device.

### BACKGROUND

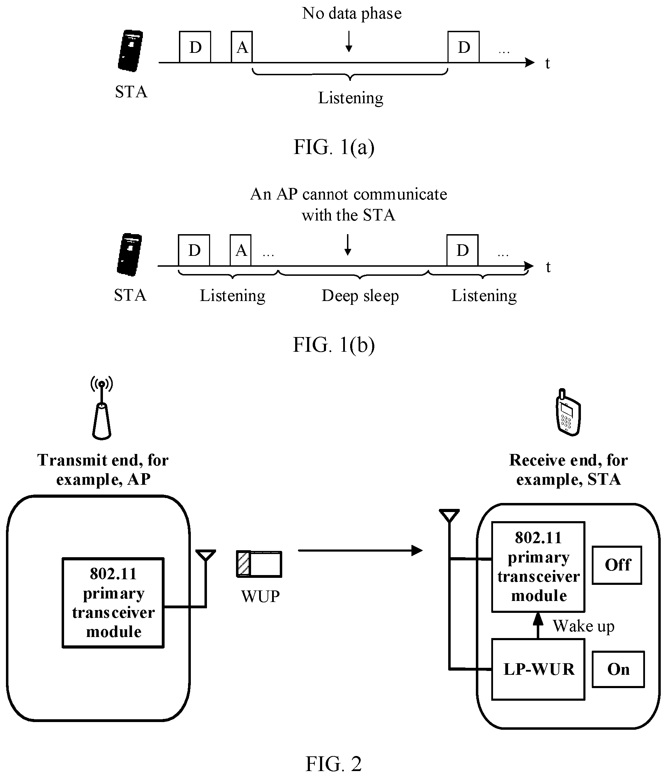

In a wireless fidelity (wireless fidelity, Wi-Fi) network, a significant proportion of energy of a device is wasted on listening with no signal received (idle listening). As shown in FIG. 1(a), when a device (for example, a station (station, STA)) has no message to send or receive (for example, in a no data (no data) phase), a large amount of electric energy is consumed if the device continuously listens to a channel. Therefore, a sleep schedule (sleep schedule) is introduced in the Wi-Fi network. As shown in FIG. 1(b), the station may enter a deep sleep (deep sleep) when no data is sent or received, to reduce energy consumption of continuous listening. However, when the station is in the deep sleep, an access point (access point, AP) cannot communicate with the station, until the station wakes up. This may lead to latency (latency). To avoid high latency caused by the sleep schedule, usually, the station wakes up frequently according to a sleep policy and checks whether there is data to be received. However, this reduces sleep efficiency of the station. Therefore, related solutions in conventional 802.11 protocols (802.11b/a/g/n/ac and the like) focus on how to optimize a sleep policy of a device.

In addition to optimizing the sleep policy, another technical way to reduce energy waste caused by device listening is to use low power wake up radio (low power wake up radio, LP-WUR) (WUR for short below). A core idea of the WUR technology is: In addition to a conventional 802.11 transceiver end (an 802.11 primary transceiver module or a Wi-Fi primary transceiver module) or primary connectivity radio (primary connectivity radio, PCR), a receive-end device (for example, a station) additionally includes a low power wake up receiver (WUR module) part. As shown in FIG. 2, after an 802.11 primary transceiver module in a station enters a deep sleep, a low power WUR module starts to work. If an access point needs to communicate with the station, the access point first sends a wake up packet (wake up packet, WUP) to the WUR module in the station. The WUR module wakes up the 802.11 primary transceiver module in the station after receiving the WUP sent to the WUR module. Then, the WUR module enters a sleep state, and the access point can communicate with the 802.11 primary transceiver module that is woken up. A circuit design of the WUR module is simple, usually including only a receive end part (therefore, the wake up radio may sometimes be referred to as a wake up receiver). After completing communication with the access point, the 802.11 primary transceiver module may enter a sleep state, while the WUR module wakes up and starts to listen to whether there is a WUP sent to the WUR module. In the WUR technology, the low power WUR module is used to replace the 802.11 primary transceiver module to listen to a channel when a medium is idle. Energy consumption of the WUR module in a listening/receiving state is usually about 0.1% to 1% of that of the 802.11 primary transceiver module, that is, less than 100 µW, and therefore energy waste of the device in a listening state can be effectively reduced.

The IEEE 802.11 working group is preparing for research and development of the 802.11 standard with WUR as a core technology, to reduce power consumption of Wi-Fi devices. However, current WUR is applicable to only a single-link communication scenario, that is, a scenario in which only one link is established between two devices in communication, and how a multi-link device performs communication by using the WUR technology in a multi-link communication scenario is not considered.

### SUMMARY

Embodiments of this application provide a multi-link device communication method and a communication device, to implement a WUR function in a multi-link communication scenario.

According to a first aspect, an embodiment of this application provides a multi-link device communication method, including the following steps: A station multi-link device sends a first wake up radio WUR setup request frame to an access point multi-link device, where the first WUR setup request frame is used to request setup of a WUR mode with the access point multi-link device, the first WUR setup request frame includes information about a first link set, and the first link set includes one or more links requested to be woken up in the WUR mode; and the station multi-link device receives a first WUR setup response frame sent by the access point multi-link device, where the first WUR setup response frame indicates successful setup of the WUR mode between the access point multi-link device and the station multi-link device, the first WUR setup response frame includes indication information, and the indication information indicates a link that is allowed to be woken up in the WUR mode and that is in the first link set.

In the multi-link device communication method provided in embodiments of this application, the station multi-link device may include a plurality of links, and the access point multi-link device may also include a plurality of links. Although the station multi-link device may establish a plurality of links with the access point multi-link device, not all of the links can be woken up in the WUR mode, and not all of the links need to be woken up in the WUR mode. After establishing a wireless connection to the access point multi-link device, the station multi-link device may send, to the access point multi-link device, the first WUR setup request frame carrying link information, to request the access point multi-link device to allow these links to be woken up in the WUR mode. The access point multi-link device may determine, based on a communication requirement, communication status, load information, and the like, which links of the station multi-link device are allowed to be woken up in the WUR mode, and notify the station multi-link device through the first WUR setup response frame. In this case, the station multi-link device and the access point multi-link device can determine, for a plurality of established links, which links can be woken up in the WUR mode, so that the access point multi-link device can flexibly wake up a specific link in the station multi-link device, thereby reducing power consumption for the station multi-link device.

In a possible implementation, the first WUR setup response frame includes information about a second link set, and the second link set includes one or more links allowed to be woken up in the WUR mode.

In a possible implementation, the first WUR setup response frame indicates that all links included in the first link set are allowed to be woken up in the WUR mode. In this case, the first WUR setup response frame does not need to include the information about the second link set.

In a possible implementation, the first WUR setup response frame further includes wake up configuration information, and the wake up configuration information includes a WUR ID of each link allowed to be woken up in the WUR mode. After determining the second link set allowed to set up the WUR mode, the access point multi-link device may allocate a WUR ID to each link in the second link set. In this case, if the access point multi-link device needs to send a WUR wake up frame to the station multi-link device in a subsequent communication process, the WUR ID may be carried in the WUR wake up frame, to indicate the link that needs to be woken up by the station multi-link device, improving communication efficiency.

In a possible implementation, the first WUR setup response frame further includes wake up configuration information, and the wake up configuration information further includes: each link allowed to be woken up in the WUR mode, and an ID of a WUR group to which each link in the second link set belongs. After determining the second link set allowed to set up the WUR mode, the access point multi-link device may further perform WUR grouping on the second link set allowed to set up the WUR mode, and determine a WUR group ID, to facilitate management by the access point multi-link device according to the WUR grouping. In this case, if the access point multi-link device needs to send a WUR wake up frame to the station multi-link device in a subsequent communication process, the WUR group ID may be carried in the WUR wake up frame, to indicate the WUR group that needs to be woken up by the station multi-link device. The station multi-link device wakes up, according to the WUR group ID, a link that belongs to the WUR group.

In a possible implementation, the method further includes the following steps: The station multi-link device sends a second WUR setup request frame to the access point multi-link device, where the second WUR setup request frame includes information for requesting addition of one or more links to be woken up in the WUR mode, or the second WUR setup request frame includes information for requesting removal of one or more links to be woken up in the WUR mode; and the station multi-link device receives a second WUR setup response frame sent by the access point multi-link device, where the second WUR setup response frame indicates successful addition, and the second WUR setup response frame includes information for allowing addition of the one or more links to be woken up in the WUR mode; or the second WUR setup response frame indicates successful removal, and the second WUR setup response frame includes information for allowing removal of the one or more links to be woken up in the WUR mode.

In a possible implementation, when the second WUR setup response frame indicates successful addition, the second WUR setup response frame further includes wake up configuration information including a WUR ID and/or an ID of a WUR group of the one or more links that are to be woken up in the WUR mode and that are allowed to be added.

In a possible implementation, the method further includes the following steps: The station multi-link device receives a third WUR setup request frame sent by the access point multi-link device, where the third WUR setup request frame includes information for requesting addition of one or more links to be woken up in the WUR mode, or the third WUR setup request frame includes information for requesting removal of one or more links to be woken up in the WUR mode; and the station multi-link device sends a third WUR setup response frame to the access point multi-link device, where the third WUR setup response frame indicates successful addition, and the third WUR setup response frame includes information for allowing addition of the one or more links to be woken up in the WUR mode; or the third WUR setup response frame indicates successful removal, and the third WUR setup response frame includes information for allowing removal of the one or more links to be woken up in the WUR mode.

According to a second aspect, an embodiment of this application provides a multi-link device communication method, including the following steps: An access point multi-link device receives a first wake up radio WUR setup request frame sent by a station multi-link device, where the first WUR setup request frame is used to request setup of a WUR mode with the access point multi-link device, the first WUR setup request frame includes information about a first link set, and the first link set includes one or more links requested to be woken up in the WUR mode; and the access point multi-link device sends a first WUR setup response frame to the station multi-link device, where the first WUR setup response frame indicates successful setup of the WUR mode between the access point multi-link device and the station multi-link device, the first WUR setup response frame includes indication information, and the indication information indicates a link that is allowed to be woken up in the WUR mode and that is in the first link set.

In a possible implementation, the first WUR setup response frame includes information about a second link set, and the second link set includes one or more links allowed to be woken up in the WUR mode.

In a possible implementation, the first WUR setup response frame indicates that all links included in the first link set are allowed to be woken up in the WUR mode. In this case, the first WUR setup response frame does not need to include the information about the second link set.

In a possible implementation, the first WUR setup response frame further includes wake up configuration information, and the wake up configuration information includes a WUR ID of each link allowed to be woken up in the WUR mode.

In a possible implementation, the first WUR setup response frame further includes wake up configuration information, and the wake up configuration information includes an ID of a WUR group to which each link allowed to be woken up in the WUR mode belongs.

In a possible implementation, the method further includes the following steps: The access point multi-link device receives a second WUR setup request frame sent by the station multi-link device, where the second WUR setup request frame includes information for requesting addition of one or more links to be woken up in the WUR mode, or the second WUR setup request frame includes information for requesting removal of one or more links to be woken up in the WUR mode; and the access point multi-link device sends a second WUR setup response frame to the station multi-link device, where the second WUR setup response frame indicates successful addition, and the second WUR setup response frame includes information for allowing addition of the one or more links to be woken up in the WUR mode; or the second WUR setup response frame indicates successful removal, and the second WUR setup response frame includes information for allowing removal of the one or more links to be woken up in the WUR mode.

In a possible implementation, when the second WUR setup response frame indicates successful addition, the second WUR setup response frame further includes wake up configuration information including a WUR ID and/or an ID of a WUR group of the one or more links that are to be woken up in the WUR mode and that are allowed to be added.

In a possible implementation, the method further includes the following steps: The access point multi-link device sends a third WUR setup request frame to the station multi-link device, where the third WUR setup request frame includes information for requesting addition of one or more links to be woken up in the WUR mode, or the third WUR setup request frame includes information for requesting removal of one or more links to be woken up in the WUR mode; and the access point multi-link device receives a third WUR setup response frame sent by the station multi-link device, where the third WUR setup response frame indicates successful addition, and the third WUR setup response frame includes information for allowing addition of the one or more links to be woken up in the WUR mode; or the third WUR setup response frame indicates successful removal, and the third WUR setup response frame includes information for allowing removal of the one or more links to be woken up in the WUR mode.

According to a third aspect, an embodiment of this application provides a communication apparatus. The communication apparatus includes modules/units for performing the method according to the first aspect and any one of the possible implementations of the first aspect. These modules/units may be implemented by hardware, or may be implemented by hardware executing corresponding software.

For example, the communication apparatus may include a processing module and a transceiver module. The processing module implements data processing by the communication apparatus, and performs the following steps through the transceiver module: sending a first wake up radio WUR setup request frame to an access point multi-link device, where the first WUR setup request frame is used to request setup of a WUR mode with the access point multi-link device, the first WUR setup request frame includes information about a first link set, and the first link set includes one or more links requested to be woken up in the WUR mode; and receiving a first WUR setup response frame sent by the access point multi-link device, where the first WUR setup response frame indicates successful setup of the WUR mode between the access point multi-link device and the station multi-link device, the first WUR setup response frame includes indication information, and the indication information indicates a link that is allowed to be woken up in the WUR mode and that is in the first link set.

According to a fourth aspect, an embodiment of this application provides a communication apparatus. The communication apparatus includes modules/units for performing the method according to the second aspect and any one of the possible implementations of the second aspect. These modules/units may be implemented by hardware, or may be implemented by hardware executing corresponding software.

For example, the communication apparatus may include a processing module and a transceiver module. The processing module implements data processing by the communication apparatus, and performs the following steps through the transceiver module: receiving a first wake up radio WUR setup request frame sent by a station multi-link device, where the first WUR setup request frame is used to request setup of a WUR mode with the access point multi-link device, the first WUR setup request frame includes information about a first link set, and the first link set includes one or more links requested to be woken up in the WUR mode; and sending a first WUR setup response frame to the station multi-link device, where the first WUR setup response frame indicates successful setup of the WUR mode between the access point multi-link device and the station multi-link device, the first WUR setup response frame includes indication information, and the indication information indicates a link that is allowed to be woken up in the WUR mode and that is in the first link set.

According to a fifth aspect, an embodiment of this application provides a communication device. The communication device includes a processor, and a memory and a communication interface that are separately coupled to the processor. The communication interface is configured to communicate with another device. The processor is configured to run instructions or a program in the memory, and perform, through the communication interface, the method according to the first aspect and any one of the possible implementations of the first aspect.

According to a sixth aspect, an embodiment of this application provides a communication device. The communication device includes a processor, and a memory and a communication interface that are separately coupled to the processor. The communication interface is configured to communicate with another device. The processor is configured to run instructions or a program in the memory, and perform, through the communication interface, the method according to the second aspect and any one of the possible implementations of the second aspect.

According to a seventh aspect, an embodiment of this application provides a computer-readable storage medium. The computer-readable storage medium stores instructions. When the instructions are run on a computer, the computer is enabled to perform the method according to the first aspect and any one of the implementations thereof, or perform the method according to the second aspect and any one of the implementations thereof.

According to an eighth aspect, an embodiment of this application provides a computer program product including instructions. When the instructions are run on a computer, the computer is enabled to perform the method according to the first aspect and any one of the implementations thereof, or perform the method according to the second aspect and any one of the implementations thereof.

For technical effects that can be achieved according to any one of the possible implementations in any one of the second aspect to the eighth aspect, refer to the description of technical effects that can be achieved according to the corresponding implementation in the first aspect. Repeated parts are not described herein.

### BRIEF DESCRIPTION OF DRAWINGS

FIG. 1(a) is a diagram of listening by a device in a no data phase;
FIG. 1(b) is a diagram of a device in a deep sleep;
FIG. 2 is a diagram of a structure of a device including a WUR module;
FIG. 3 is a diagram of multi-link association between a station multi-link device and an access point multi-link device;
FIG. 4(a) and FIG. 4(b) are diagrams of application scenarios of a multi-link device communication method according to embodiments of this application;
FIG. 5 is a schematic flowchart of a multi-link device communication method according to an embodiment of this application;
FIG. 6 is a diagram of a structure of a WUR wake up frame according to an embodiment of this application;
FIG. 7(a), FIG. 7(b), FIG. 7(c), and FIG. 7(d) are diagrams of a structure of a WUR setup request frame/response frame according to an embodiment of this application;
FIG. 8(a) and FIG. 8(b) are diagrams of a structure of another WUR setup request frame/response frame according to an embodiment of this application;
FIG. 9 is a diagram of a structure of a communication apparatus according to an embodiment of this application; and
FIG. 10 is a diagram of a structure of a communication device according to an embodiment of this application.

### DESCRIPTION OF EMBODIMENTS

With the development of wireless technology, more and more wireless devices support multi-link communication. For example, a wireless device may perform communication simultaneously on frequency bands of 2.4 GHz, 5 GHz, and 6 GHz, or perform communication simultaneously on different channels of a same frequency band, to increase a communication rate between devices. The device that can support multi-link communication is usually referred to as a multi-link device (MLD, multi-link device).

The multi-link device includes an access point multi-link device (AP MLD) and a non-access point multi-link device (non-AP MLD, also referred to as a station multi-link device). The station multi-link device usually includes a plurality of STAs, and each STA works on a specific frequency band or channel. The access point multi-link device usually includes one or more APs, and each AP may work on one or more frequency bands or on one or more channels.

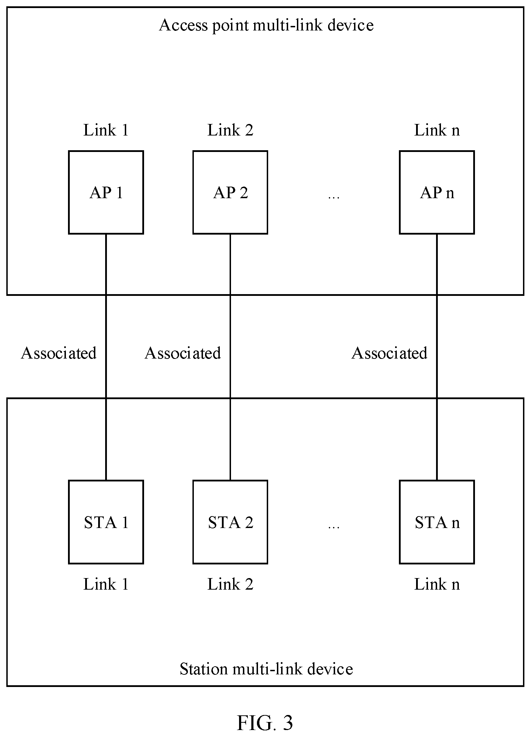

The station multi-link device may perform multi-link establishment (also referred to as multi-link association) with the access point multi-link device. As shown in FIG. 3, an STA 1 working on a frequency band 1 is associated with an AP 1 working on the frequency band 1, an STA 2 working on a frequency band 2 is associated with an AP 2 working on the frequency band 2, ..., and an STA n working on a frequency band N is associated with an AP n working on the frequency band N. After the association, the station multi-link device and the access point multi-link device can perform multi-link communication.

During multi-link establishment (or multi-link association), an STAin the station multi-link device may send an association request frame to an AP in the access point multi-link device. The association request frame carries a multi-link element (multi-link element, MLE, also referred to as a multi-link information unit), and the multi-link element may be used for carrying information about the station multi-link device and information about another STA in the station multi-link device. Correspondingly, the AP receiving the association request frame replies with an association response frame to the STA sending the association request frame. The association response frame may also carry an MLE for carrying information about the access point multi-link device and information about another AP in the access point multi-link device.

Currently, the IEEE Standards Association develops the 802.11ba standard for the WUR function. However, this standard is developed for a single-link device, and a multi-link device is not considered. Therefore, how to implement the WUR function for the multi-link device is a problem to be resolved during the development of wireless communication technology.

In view of this, embodiments of this application provide a multi-link device communication method, to implement the WUR function for the multi-link device.

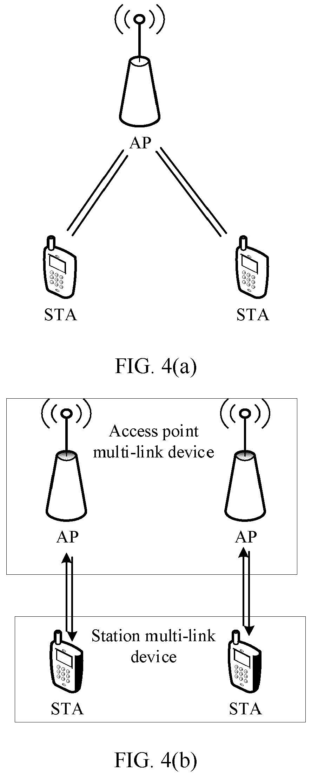

The multi-link device communication method provided in embodiments of this application may be applied to communication scenarios shown in FIG. 4(a) and FIG. 4(b). As shown in FIG. 4(a), the communication scenario may include an access point multi-link device and one or more station multi-link devices. The access point multi-link device is a device with a multi-link WLAN access function, such as a router (router), an optical network terminal (ONT), or a digital subscriber line modem (DSL Modem). The station multi-link device is a station device with a plurality of links, and may be a mobile phone, a tablet computer, a wireless network notebook computer, or another device that can access a wireless network through a WLAN. As shown in FIG. 4(b), an access point multi-link device may include a plurality of APs, and a station multi-link device may also include a plurality of STAs. An AP and an STA that work on a same frequency band or channel may be associated, to communicate on the corresponding frequency band or channel. In the figure, an example in which the access point multi-link device includes two APs and the station multi-link device includes two STAs is used. During actual application, the access point multi-link device may include more APs, and the station multi-link device may also include more STAs. A quantity of APs included in the access point multi-link device and a quantity of STAs included in the station multi-link device may be the same or may be different.

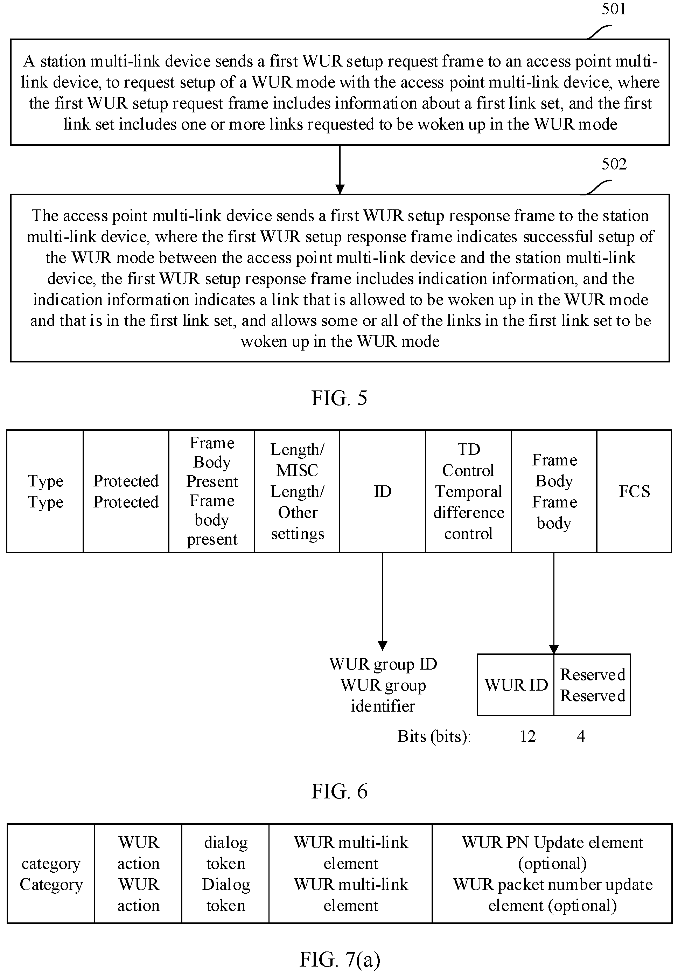

FIG. 5 is a schematic flowchart of a multi-link device communication method according to an embodiment of this application. As shown in the figure, the method may include the following steps.

Step 501: A station multi-link device sends a first WUR setup request frame to an access point multi-link device, to request setup of a WUR mode with the access point multi-link device, where the first WUR setup request frame includes information about a first link set, and the first link set includes one or more links requested to be woken up in the WUR mode.

The station multi-link device sends the first WUR setup request frame to the access point multi-link device, to request setup of the WUR mode with the access point multi-link device. To be specific, a primary transceiver module of the station multi-link device may be in a sleep state while a WUR module is in a working state, and the access point multi-link device may wake up the primary transceiver module of the station multi-link device by using a WUR wake up frame.

Specifically, the station multi-link device may include a plurality of STAs, and each STA works on a specific frequency band or channel and corresponds to a link. However, not all links may be woken up in the WUR mode. The one or more links included in the first link set are links requested, by the station multi-link device, to be woken up in the WUR mode. The link included in the first link set may include all or some links included in the station multi-link device. The information about the first link set may include information about an STA on each link in the first link set, and/or an identifier of each link in the first link set.

Step 502: The access point multi-link device sends a first WUR setup response frame to the station multi-link device, where the first WUR setup response frame indicates successful setup of the WUR mode between the access point multi-link device and the station multi-link device, the first WUR setup response frame includes indication information, and the indication information indicates a link that is allowed to be woken up in the WUR mode and that is in the first link set.

Specifically, after receiving the first WUR setup request frame sent by the station multi-link device, the access point multi-link device may determine whether to allow setup of the WUR mode with the station multi-link device, and may further determine which links can be allowed to be woken up in the WUR mode. When determining that the setup of the WUR mode with the station multi-link device is allowed, the access point multi-link device sends the first WUR setup response frame. When determining that the setup of the WUR mode with the station multi-link device is not allowed, the access point multi-link device sends, to the station multi-link device, a response frame that indicates a failure of the setup of the WUR mode.

In a possible implementation, the access point multi-link device may determine a second link set allowed to be woken up in the WUR mode, and a link included in the second link set may be all or some of the links included in the first link set.

In another possible implementation, if the access point multi-link device determines that all the links included in the first link set can be woken up in the WUR mode, a concept of the second link set may not be introduced. To be specific, the first WUR setup response frame with which the access point multi-link device replies to the station multi-link device may not include information about each link in the second link set. In other words, the first WUR setup response frame indicates an agreement that the links included in the first link set can be woken up in the WUR mode.

After the station multi-link device receives the first WUR setup response frame sent by the access point multi-link device, the station multi-link device may determine, based on an indication of the first WUR setup response frame, one or more links that can be woken up in the WUR mode. In this case, in a subsequent communication process, the station multi-link device can control, based on status of the station multi-link device or based on the indication of the access point multi-link device, some or all of the links in the second link set to enter a sleep state, and wake up the WUR module to listen to a WUR wake up frame. For example, if the first WUR setup response frame includes information about the second link set, the station multi-link device determines that the second link set includes a link that can be woken up in the WUR mode; or if the second link set is not included, the station multi-link device determines that all the links in the first link set can be woken up in the WUR mode.

In a subsequent communication process, if the station multi-link device receives a WUR wake up frame, for example, a wake up receiver (wakeup radio) in the station multi-link device receives the WUR wake up frame, a corresponding link is woken up based on an indication of the WUR wake up frame. That a link is woken up may include that a station working on the link is woken up, or that a station working on the link changes to be in an awake state (awake state), or that a station working on the link may perform communication (become available).

In a possible implementation, the first WUR setup response frame sent by the access point multi-link device may further include wake up configuration information, and the wake up configuration information may include a WUR ID of each link allowed to be woken up in the WUR mode. In this case, if the access point multi-link device needs to send a WUR wake up frame to the station multi-link device in a subsequent communication process, the WUR ID may be carried in the WUR wake up frame, to indicate the link that needs to be woken up by the station multi-link device, that is, an STA that needs to be woken up.

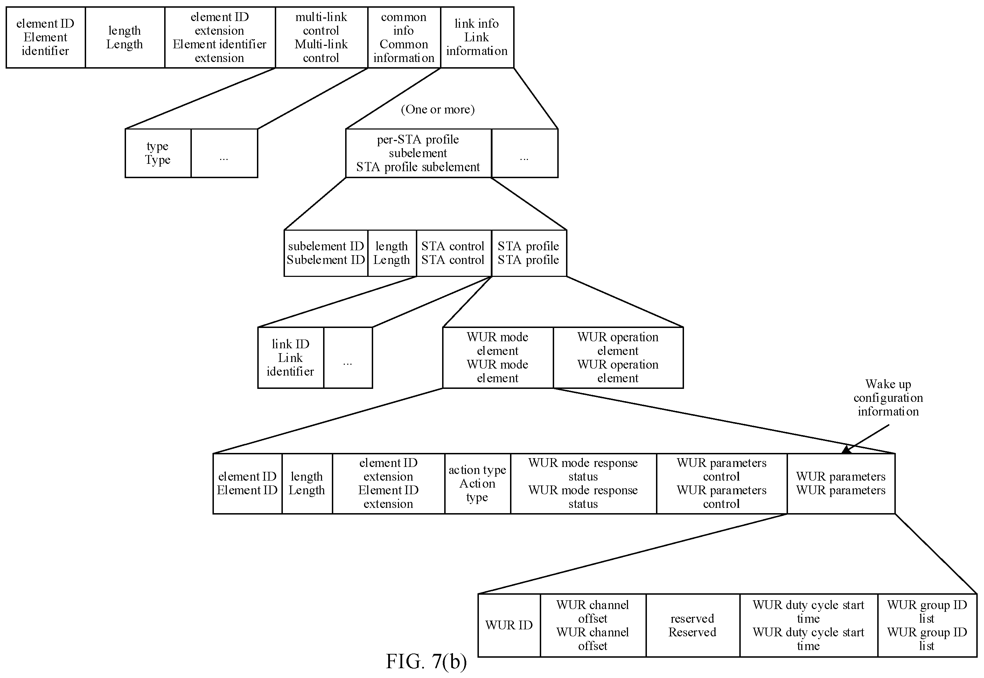

For example, the first WUR setup request frame sent by the station multi-link device includes the information about the first link set, where the first link set may include a link 1, a link 2, and a link 3, indicating that the access point multi-link device is requested to allow the link 1, the link 2, and the link 3 to be woken up in the WUR mode. After receiving the first WUR setup request frame, the access point multi-link device determines that the link 1, the link 2, and the link 3 are allowed to be woken up in the WUR mode, and allocates a WUR ID 1 to the link 1, a WUR ID 2 to the link 2, and a WUR ID 3 to the link 3. The access point multi-link device sends the first WUR setup response frame to the station multi-link device. The first WUR setup response frame includes the information about the second link set and a WUR ID allocated to each link in the second link set. In a specific embodiment, the foregoing information may be represented in the following forms: a correspondence between an identifier of the link 1 and the WUR ID 1, a correspondence between an identifier of the link 2 and the WUR ID 2, and a correspondence between an identifier of the link 3 and the WUR ID 3. For example, a structure of the first WUR setup response frame may be shown in FIG. 7(a) and FIG. 7(b). In FIG. 7(b), as three links are allowed to be woken up in the WUR mode, link information (link info) includes three STA profile subelements (per-STA profile subelement). The per-STA profile subelement corresponding to the link 1 is used as an example, a link identifier (link ID) may indicate the identifier of the link 1, and WUR ID indicates the WUR ID allocated by the access point multi-link device to the link 1.

After receiving the first WUR setup response frame, the station multi-link device determines that all the link 1, the link 2, and the link 3 are allowed to be woken up in the WUR mode, the WUR ID 1 indicates the link 1, the WUR ID 2 indicates the link 2, and the WUR ID 3 indicates the link 3. After some or all links of the station multi-link device enter a sleep state, the WUR module starts to work, that is, listens to a WUR wake up frame sent by the access point multi-link device. If the WUR wake up frame is received, a to-be-woken-up link is determined based on a WUR ID included in the WUR wake up frame, and the station multi-link device wakes up the corresponding link, that is, wakes up an STA corresponding to the link.

Alternatively, the wake up configuration information may include a WUR ID of each link in the first link set. When the access point multi-link device determines that all the links in the first link set can be woken up in the WUR mode, the wake up configuration information is the WUR ID configured by the access point multi-link device for the link in the first link set, and the concept of the second link set does not need to be introduced.

Optionally, the wake up configuration information included in the first WUR setup response frame sent by the access point multi-link device may also include an ID of a WUR group (group) to which each link allowed to be woken up in the WUR mode belongs. After determining links allowed to be woken up in the WUR mode, the access point multi-link device may further perform WUR grouping on these links, and determine a WUR group ID, to facilitate management by the access point multi-link device according to the WUR grouping. In this case, if the access point multi-link device needs to send a WUR wake up frame to the station multi-link device in a subsequent communication process, the WUR group ID may be carried in the WUR wake up frame, to indicate the WUR group that needs to be woken up by the station multi-link device. The station multi-link device wakes up, according to the WUR group ID, a link that belongs to the WUR group, that is, wakes up an STA on the corresponding link. It should be understood that the wake up configuration information may include a WUR ID of each link allowed to be woken up in the WUR mode, or may include a WUR group ID of each link allowed to be woken up in the WUR mode, or may include a WUR ID and a WUR group ID of each link allowed to be woken up in the WUR mode.

For example, the first WUR setup request frame sent by the station multi-link device may include an identifier of a link 1, an identifier of a link 2, an identifier of a link 3, and an identifier of a link 4, indicating that the link 1, the link 2, the link 3, and the link 4 are requested to be woken up in the WUR mode. After receiving the first WUR setup request frame, the access point multi-link device determines that the link 1, the link 2, the link 3, and the link 4 are allowed to be woken up in the WUR mode, and allocates a WUR ID 1 to the link 1, a WUR ID 2 to the link 2, a WUR ID 3 to the link 3, and a WUR ID 4 to the link 4. Further, the access point multi-link device groups the link 1 and the link 2 into a WUR group 1, and groups the link 3 and the link 4 into a WUR group 2. The access point multi-link device sends the first WUR setup response frame to the station multi-link device. The first WUR setup response frame includes the information about the second link set and the wake up configuration information. In a specific embodiment, the information about the second link set and the wake up configuration information may be represented in the following forms: a correspondence between the identifier of the link 1 and the WUR ID 1, a correspondence between the identifier of the link 1 and the WUR group 1, a correspondence between the identifier of the link 2 and the WUR ID 2, a correspondence between the identifier of the link 2 and the WUR group 1, a correspondence between the identifier of the link 3 and the WUR ID 3, a correspondence between the identifier of the link 3 and the WUR group 2, a correspondence between the identifier of the link 4 and the WUR ID 4, and a correspondence between the identifier of the link 4 and the WUR group 2. After receiving the first WUR setup response frame, the station multi-link device determines that all the link 1, the link 2, the link 3, and the link 4 are allowed to be woken up in the WUR mode, the WUR ID 1 indicates the link 1, the WUR ID 2 indicates the link 2, the WUR ID 3 indicates the link 3, the WUR ID 4 indicates the link 4, the link 1 and the link 2 belong to the WUR group 1, and the link 3 and the link 4 belong to the WUR group 2. After some or all links of the station multi-link device enter a sleep state, the WUR module starts to work, that is, listens to a WUR wake up frame sent by the access point multi-link device. If the WUR wake up frame is received and the WUR wake up frame includes the WUR group 2, the station multi-link device determines to wake up the link 3 and the link 4 that are included in the WUR group 2, that is, wake up an STA corresponding to the link 3 and an STA corresponding to the link 4. In some other embodiments, the access point multi-link device may not allocate a WUR ID to each link, and only perform WUR grouping and allocate a WUR group ID. Optionally, the wake up configuration information may include an ID of a WUR group to which each link belongs, but does not include a WUR ID of each link.

Different links in the station multi-link device may belong to a same WUR group, that is, be configured with a same WUR group ID. For example, the first WUR setup request frame sent by the station multi-link device may include an identifier of a link 1, an identifier of a link 2, an identifier of a link 3, and an identifier of a link 4. The access point multi-link device determines that the link 1, the link 2, the link 3, and the link 4 are allowed to be woken up in the WUR mode, and groups the link 1, the link 2, the link 3, and the link 4 into a WUR group corresponding to a WUR group 1. In this case, the first WUR setup response frame with which the access point multi-link device replies may include a correspondence between the identifier of the link 1 and the WUR group 1, a correspondence between the identifier of the link 2 and the WUR group 1, a correspondence between the identifier of the link 3 and a WUR group 1, and a correspondence between the identifier of the link 4 and the WUR group 1. Further, the access point multi-link device may further allocate WUR IDs to some or all of the link 1, the link 2, the link 3, and the link 4, to facilitate subsequent wakeup of some links in the WUR group.

Alternatively, the wake up configuration information may include an ID of a WUR group to which each link in the first link set belongs. When the access point multi-link device determines that all the links in the first link set can be woken up in the WUR mode, the wake up configuration information is the ID of the WUR group, configured by the access point multi-link device, to which the link in the first link set belongs, and the concept of the second link set does not need to be introduced.

In the case of WUR grouping, although management in WUR groups is simpler and more convenient, there is still a requirement of performing different operations on different links in a same group. For example, a link 1 and a link 2 are grouped into a group, but the access point multi-link device may need to wake up the link 1, but does not need to wake up the link 2. In this case, to further control power consumption of the station multi-link device, the access point multi-link device may alternatively wake up some links in a WUR group.

For example, when the access point multi-link device needs to wake up a link 1 in a WUR group 1, a WUR wake up frame sent by the access point multi-link device may further carry a WUR ID of the link 1 while carrying the WUR group 1. When receiving a WUR wake up frame, if the station multi-link device finds that the WUR wake up frame includes only the WUR group 1, the station multi-link device determines to wake up all links included in the WUR group 1; or if the station multi-link device finds that the WUR wake up frame includes both the WUR group 1 and the WUR ID of the link 1, the station multi-link device may determine to wake up only the link 1, but does not need to wake up the link 2. In this case, the WUR ID of each link may be unique in the station multi-link device, or may be unique in the WUR group.

For example, a structure of a WUR wake up frame may be shown in FIG. 6. An ID field may be used to carry a WUR group ID. A WUR ID field may be added into a frame body (frame body), to indicate a link to be woken up in a WUR group indicated by the WUR group ID.

In another example, when the access point multi-link device needs to wake up a link 1 in a WUR group 1, a WUR wake up frame sent by the access point multi-link device may not carry a WUR group ID. If a field that indicates the WUR group ID in a wake up frame is vacant, it is sufficient to carry only a WUR ID corresponding to a link that needs to be woken up. Although a plurality of links are grouped, if a WUR wake up frame received by the station multi-link device includes only a WUR ID, the station multi-link device can only wake up a link corresponding to the WUR ID. In this case, the WUR ID of each link may be unique in the station multi-link device.

In a possible design manner, only one WUR module may be configured in the station multi-link device. The WUR module can listen to a WUR wake up frame for a plurality of links, and determine, based on the WUR wake up frame, links that need to be woken up, to wake up STAs on the links. The configuration of only one WUR module in the station multi-link device can further reduce power consumption of the device in a sleep state when a plurality of links are in the sleep state at the same time.

In some embodiments, the first WUR setup response frame sent by the access point multi-link device may further include WUR channel information that indicates a channel for sending a WUR wake up frame. In this case, the WUR module of the station multi-link device may listen to the WUR wake up frame on the channel indicated by the WUR channel information, and does not need listening on a plurality of channels. This can further reduce power consumption of the WUR module, thereby reducing power consumption of the station multi-link device. When only one WUR module is configured in the station multi-link device, the WUR module may configure channels for WUR wake up frames corresponding to all links as a channel indicated by WUR channel information sent by the access point multi-link device, to listen to WUR wake up frames of a plurality of links on one channel.

Certainly, a plurality of WUR modules may alternatively be configured in the station multi-link device. For example, if one WUR module is configured for each link, each WUR module is responsible for waking up only an STA on a link to which the WUR module belongs. Optionally, a listening frequency band or a listening channel of each WUR module may be a frequency band or a channel on which a link corresponding to the WUR module works.

After the station multi-link device and the access point multi-link device set up the WUR mode for one or more links, addition of a new link that can be woken up in the WUR mode may be further requested, or removal of a link that can be woken up in the WUR mode may be further requested.

Optionally, the station multi-link device may request addition or removal of a link that can be woken up in the WUR mode. For example, the station multi-link device may send a second WUR setup request frame of a first type to the access point multi-link device, to request addition of a link that can be woken up in the WUR mode. The second WUR setup request frame includes information for requesting addition of one or more links that can be woken up in the WUR mode. Correspondingly, after receiving the second WUR setup request frame of the first type, the access point multi-link device replies to the station multi-link device with a second WUR setup response frame of the first type, to indicate whether the addition of the link is allowed, and further, indicate which links to be woken up in the WUR mode are allowed to be added. In another example, the station multi-link device may send a second WUR setup request frame of a second type to the access point multi-link device, to request removal of a link that can be woken up in the WUR mode. The second WUR setup request frame of the second type includes information for requesting removal of one or more links that can be woken up in the WUR mode. Correspondingly, after receiving the second WUR setup request frame of the second type, the access point multi-link device replies to the station multi-link device with a second WUR setup response frame of the second type, to indicate whether the removal of the link is allowed, and further, indicate which links that can be woken up in the WUR mode are allowed to be removed.

After determining that the addition of the link to be woken up in the WUR mode is allowed, the access point multi-link device may further allocate a WUR ID and/or a WUR group ID to each added link, and include the allocated WUR ID and/or WUR group ID in wake up configuration information of the second WUR setup response frame, to be sent to the station multi-link device.

Optionally, the access point multi-link device may also request addition or removal of a link that can be woken up in the WUR mode. For example, the access point multi-link device may send a third WUR setup request frame of the first type to the station multi-link device, to indicate addition of establishment of a link that can be woken up in the WUR mode. The third WUR setup request frame of the first type includes information for requesting addition of one or more links that can be woken up in the WUR mode. The link indicated by the third WUR setup request frame of the first type belongs to the first link set, that is, a link that is previously requested by the station multi-link device to be woken up in the WUR mode but that is not allowed by the access point multi-link device to be woken up in the WUR mode. Correspondingly, after receiving the third WUR setup request frame of the first type, the station multi-link device may reply to the access point multi-link device with a third WUR setup response frame of the first type, to indicate whether the addition of the link is allowed, and further, indicate which links to be woken up in the WUR mode are allowed to be added. In another example, the access point multi-link device may send a third WUR setup request frame of the second type to the station multi-link device, to indicate removal of a link that can be woken up in the WUR mode. The third WUR setup request frame of the second type includes information of one or more links that can be woken up in the WUR mode and that need to be removed. Correspondingly, after receiving the third WUR setup request frame of the second type, the station multi-link device may reply to the access point multi-link device with a third WUR setup response frame of the second type, to indicate whether the removal of the link is allowed, and further, indicate which links that can be woken up in the WUR mode are allowed to be removed.

An embodiment of this application further provides a structure of a WUR setup request frame/WUR setup response frame, to implement the foregoing method embodiments.

In a possible manner, a format of the first WUR setup request frame/first WUR setup response frame may be shown in FIG. 7(a). A category (category) field indicates a type of an action frame. In an embodiment of this application, the category field indicates a WUR type, indicating that the action frame is a WUR-related action frame. A WUR action (WUR action) field indicates whether the action frame is a WUR setup request frame or a WUR setup response frame. A dialog token (dialog token) field is used to mark a request frame and a response frame that are in a pair. A WUR packet number update element (WUR PN update element) field is used to carry information about the WUR PN update. A WUR multi-link element (WUR multi-link element) is a newly added field, optionally with a structure shown in FIG. 7(b). The WUR multi-link element field may have a common structure of a multi-link element field, for example, including multi-link control (multi-link control), common information (common info), and link information (link info). A type (type) field in multi-link control may be a newly defined value, and may indicate that the multi-link element field (multi-link control, common info, and link info) is a WUR multi-link element field. The link info field may include one or more STA profile subelements (per-STA profile subelement fields). Each per-STA profile subelement corresponds to a link. A corresponding link is represented by a link identifier (link ID). Links corresponding to all per-STA profile subelements are the first link set or the second link set in the foregoing embodiments.

The wake up configuration information in the foregoing method embodiments may be represented by a WUR parameter (WUR parameter) field shown in FIG. 7(b). The WUR parameter includes a WUR ID field, and may further include a WUR channel offset (WUR channel offset), a reserved field (reserved), WUR duty cycle start time (WUR duty cycle start time), a WUR group ID list (WUR group ID list), and the like.

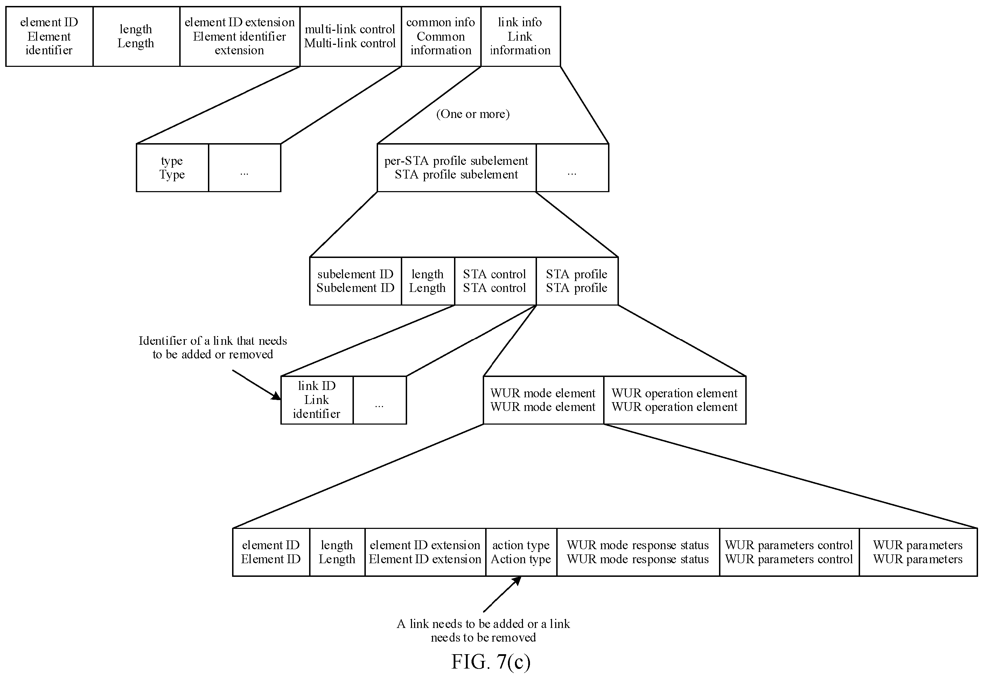

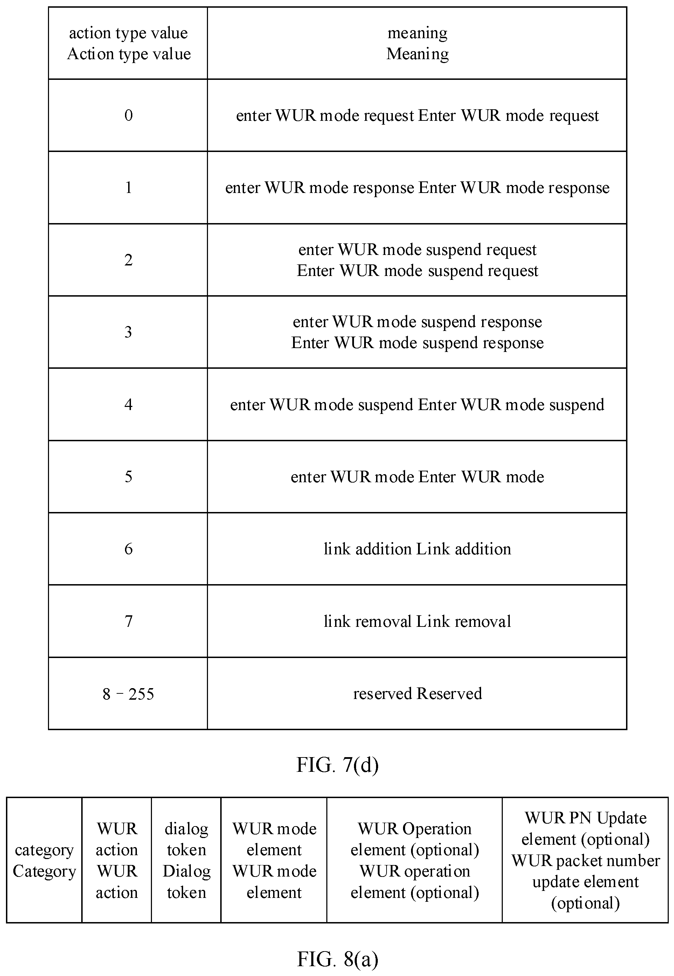

Structures of the second WUR setup request frame/second WUR setup response frame of the first type and the second WUR setup request frame/second WUR setup response frame of the second type in the foregoing embodiments are similar to the frame structures shown in FIG. 7(a) and FIG. 7(b), with a difference that: each per-STA profile subelement included in a link info field of the second WUR setup request frame/second WUR setup response frame corresponds to a link that needs to be added or removed, and in the per-STA profile subelement, a link ID indicates an identifier of a link that needs to be added or removed, and an action type (action type) in a WUR mode element (WUR mode element) indicates that a link needs to be added or a link needs to be removed, as shown in FIG. 7(c). For example, FIG. 7(d) is a diagram of a value of an action type field and a corresponding meaning. As shown in the figure, meanings of action type values (action type value) 0 to 5 are the same as those defined in an existing standard. In an embodiment of this application, cases of action type value = 6 and action type value = 7 are added. Herein, action type value = 6 may indicate addition of a link in the WUR mode, that is, indicate that the action frame is the second WUR setup request frame/second WUR setup response frame of the first type; and action type value = 7 may indicate removal of a link in the WUR mode, that is, indicate that the action frame is the second WUR setup request frame/second WUR setup response frame of the second type.

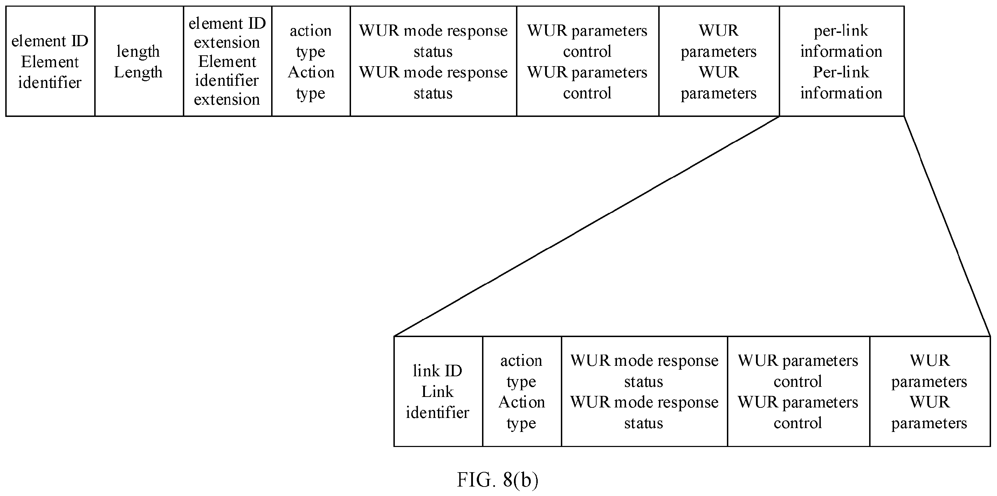

In another possible manner, a format of the first WUR setup request frame/first WUR setup response frame may be shown in FIG. 8(a). A WUR action (WUR action) field indicates whether the action frame is a WUR setup request frame or a WUR setup response frame. A format of a WUR mode element (WUR mode element) field may be shown in FIG. 8(b). A per-link information (per-link information) field is a newly added field. A link identifier (link ID) in the per-link information indicates the first link set in the request frame or the second link set in the response frame. WUR parameters (WUR parameters) in the per-link information are similar to the WUR parameters in FIG. 7(b). For details, refer to the foregoing descriptions. WUR mode response status (WUR mode response status), WUR parameters control (WUR parameters control), and WUR parameters (WUR parameters) in the WUR mode element are used to carry information about a link for sending a request frame/response frame. These three fields are optional.

It should be understood that, for the structure of the WUR setup request frame/WUR setup response frame, FIG. 7(a) to FIG. 7(d), FIG. 8(a), and FIG. 8(b) are merely examples. Alternatively, a WUR setup request frame/WUR setup response frame of another structure may be used to implement the foregoing method embodiments. This is not limited in this application.

In the multi-link device communication method provided in embodiments of this application, the station multi-link device may include a plurality of links, and the access point multi-link device may also include a plurality of links. Although the station multi-link device may establish a plurality of links with the access point multi-link device, not all of the links can be woken up in the WUR mode, and not all of the links need to be woken up in the WUR mode. After establishing a wireless connection to the access point multi-link device, the station multi-link device may send, to the access point multi-link device, the first WUR setup request frame carrying link information, to request the access point multi-link device to allow these links to be woken up in the WUR mode. The access point multi-link device may determine, based on a communication requirement, communication status, load information, and the like, which links of the station multi-link device are allowed to be woken up in the WUR mode, and notify the station multi-link device through the first WUR setup response frame. In this case, the station multi-link device and the access point multi-link device can determine, for a plurality of established links, which links can be woken up in the WUR mode, thereby reducing power consumption for the station multi-link device.

The foregoing describes the solutions provided in embodiments of this application mainly from a perspective of interaction between network elements. Correspondingly, an embodiment of this application further provides a communication apparatus. The communication apparatus may be the station multi-link device in the foregoing method embodiments, or an apparatus including the station multi-link device, or a component that may be used for the station multi-link device. Alternatively, the communication apparatus may be the access point multi-link device in the foregoing method embodiments, or an apparatus including the access point multi-link device, or a component that may be used for the access point multi-link device. It may be understood that, to implement the foregoing functions, the communication apparatus includes a hardware structure and/or a software module for performing a corresponding function. A person skilled in the art should easily be aware that, in combination with units and algorithm steps of the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

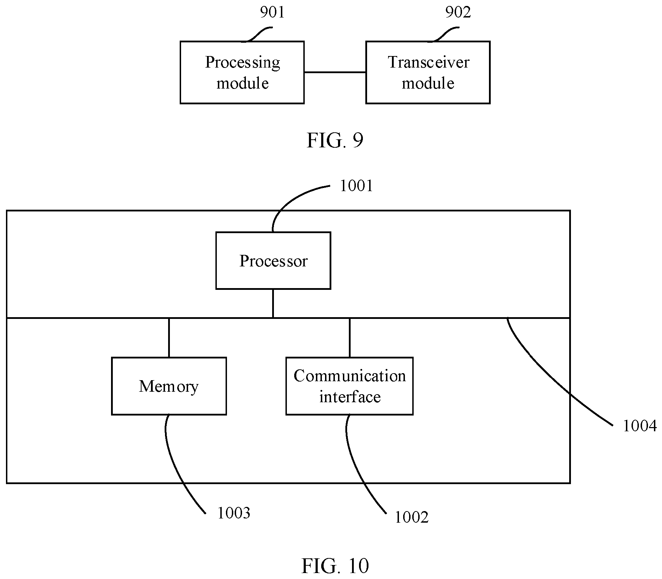

FIG. 9 is a diagram of a communication apparatus according to an embodiment of this application. The communication apparatus includes a processing module 901 and a transceiver module 902. The processing module 901 is configured to implement data processing by the communication apparatus. The transceiver module 902 is configured to receive content of the communication apparatus with another unit or network element, or is configured to send content of the communication apparatus with another unit or network element. It should be understood that, in an embodiment of this application, the processing module 901 may be implemented by a processor or a processor-related circuit component (also referred to as a processing circuit), and the transceiver module 902 may be implemented by a receiver/transmitter or a receiver/transmitter-related circuit component.

For example, the communication apparatus may be a communication apparatus device, or may be a chip used in a communication apparatus device or another combined device or component with a function of the communication apparatus device.

When the communication apparatus is the station multi-link device, the processing module 901 implements data processing by the communication apparatus, and performs the following steps through the transceiver module 902: sending a first wake up radio WUR setup request frame to an access point multi-link device, where the first WUR setup request frame is used to request setup of a WUR mode with the access point multi-link device, the first WUR setup request frame includes information about a first link set, and the first link set includes one or more links requested to be woken up in the WUR mode; and receiving a first WUR setup response frame sent by the access point multi-link device, where the first WUR setup response frame indicates successful setup of the WUR mode between the access point multi-link device and the station multi-link device, the first WUR setup response frame includes indication information, and the indication information indicates a link that is allowed to be woken up in the WUR mode and that is in the first link set.

In addition, the foregoing modules may be further configured to support another process performed by the station multi-link device in any implementation of the foregoing method embodiments. For beneficial effects, refer to the foregoing descriptions. Details are not described herein again.

When the communication apparatus is the access point multi-link device, the processing module 901 implements data processing by the communication apparatus, and performs the following steps through the transceiver module 902: receiving a first wake up radio WUR setup request frame sent by a station multi-link device, where the first WUR setup request frame is used to request setup of a WUR mode with the access point multi-link device, the first WUR setup request frame includes information about a first link set, and the first link set includes one or more links requested to be woken up in the WUR mode; and sending a first WUR setup response frame to the station multi-link device, where the first WUR setup response frame indicates successful setup of the WUR mode between the access point multi-link device and the station multi-link device, the first WUR setup response frame includes indication information, and the indication information indicates a link that is allowed to be woken up in the WUR mode and that is in the first link set.

In addition, the foregoing modules may be further configured to support another process performed by the access point multi-link device in any implementation of the foregoing method embodiments. For beneficial effects, refer to the foregoing descriptions. Details are not described herein again.

FIG. 10 is a diagram of another communication device according to an embodiment of this application. The communication device includes a processor 1001, a communication interface 1002, and a memory 1003. The processor 1001, the communication interface 1002, and the memory 1003 may be connected to each other through a bus 1004. The bus 1004 may be a peripheral component interconnect (peripheral component interconnect, PCI) bus, an extended industry standard architecture (extended industry standard architecture, EISA) bus, or the like. The bus 1004 may be classified into an address bus, a data bus, a control bus, and the like. For ease of representation, the bus is represented by using only one line in FIG. 10, but it does not mean that there is only one bus or only one type of bus. The processor 1001 may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (Generic Array Logic, GAL), or any combination thereof. The memory 1003 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache.

For example, the communication device may be the station multi-link device, or may be the access point multi-link device.

The processor 1001 is configured to implement a data processing operation by the communication device. The communication interface 1002 is configured to implement a receiving operation and a sending operation by the communication device.

When the communication device is the station multi-link device, the processor 1001 is configured to perform the following steps through the communication interface 1002: sending a first wake up radio WUR setup request frame to an access point multi-link device, where the first WUR setup request frame is used to request setup of a WUR mode with the access point multi-link device, the first WUR setup request frame includes information about a first link set, and the first link set includes one or more links requested to be woken up in the WUR mode; and receiving a first WUR setup response frame sent by the access point multi-link device, where the first WUR setup response frame indicates successful setup of the WUR mode between the access point multi-link device and the station multi-link device, the first WUR setup response frame includes indication information, and the indication information indicates a link that is allowed to be woken up in the WUR mode and that is in the first link set.

In addition, the foregoing components may be further configured to support another process performed by the station multi-link device in any implementation of the foregoing method embodiments. For beneficial effects, refer to the foregoing descriptions. Details are not described herein again.

When the communication device is the access point multi-link device, the processor 1001 is configured to perform the following steps through the communication interface 1002: receiving a first wake up radio WUR setup request frame sent by a station multi-link device, where the first WUR setup request frame is used to request setup of a WUR mode with the access point multi-link device, the first WUR setup request frame includes information about a first link set, and the first link set includes one or more links requested to be woken up in the WUR mode; and sending a first WUR setup response frame to the station multi-link device, where the first WUR setup response frame indicates successful setup of the WUR mode between the access point multi-link device and the station multi-link device, the first WUR setup response frame includes indication information, and the indication information indicates a link that is allowed to be woken up in the WUR mode and that is in the first link set.

In addition, the foregoing components may be further configured to support another process performed by the access point multi-link device in any implementation of the foregoing method embodiments. For beneficial effects, refer to the foregoing descriptions. Details are not described herein again.

Based on a same technical concept, an embodiment of this application further provides a computer-readable storage medium. The computer-readable storage medium stores computer-readable instructions. When the computer-readable instructions are run on a computer, the method according to any one of the foregoing possible implementations is performed.

An embodiment of this application provides a computer program product including instructions. When the instructions are run on a computer, the computer is enabled to perform the method according to any one of the foregoing possible implementations.

In descriptions of embodiments of this application, the term "and/or" describes an association relationship between associated objects and indicates that three relationships may exist. For example, A and/or B may indicate the following three cases: Only A exists, both A and B exist, and only B exists. The term "plurality of" involved in this application means two or more.

In addition, it needs to be understood that, in descriptions of this application, terms such as "first" and "second" are merely used for distinction and description, but cannot be understood as an indication or implication of relative importance, or cannot be understood as an indication or implication of a sequence. Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", "in other embodiments", and the like that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "including but not limited to", unless otherwise specifically emphasized in another manner.

The method steps in embodiments of this application may be implemented in a hardware manner, or may be implemented in a manner of executing software instructions by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a base station or a terminal. Certainly, the processor and the storage medium may alternatively exist in a base station or a terminal as discrete components.

All or some of the foregoing embodiments may be implemented by using software, hardware, firmware, or any combination thereof. When implemented by using software, all or some of the embodiments may be implemented in a form of a computer program product. The computer program product includes one or more computer programs or instructions. When the computer programs or instructions are loaded and executed on a computer, the procedures or functions in embodiments of this application are all or partially performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers involved in embodiments of this application are merely used for differentiation for ease of description, and are not used to limit the scope of embodiments of this application. Sequence numbers of the foregoing processes do not mean a sequence of performing the processes, and the sequence of performing the processes should be determined based on functions and internal logic of the processes.

## Claims

1. A multi-link device communication method, wherein the method comprises:
sending, by a station multi-link device, a first wake up radio WUR setup request frame to an access point multi-link device, wherein the first WUR setup request frame is used to request setup of a WUR mode with the access point multi-link device, the first WUR setup request frame comprises information about a first link set, and the first link set comprises one or more links requested to be woken up in the WUR mode; and
receiving, by the station multi-link device, a first WUR setup response frame sent by the access point multi-link device, wherein the first WUR setup response frame indicates successful setup of the WUR mode between the access point multi-link device and the station multi-link device, the first WUR setup response frame comprises indication information, and the indication information indicates a link that is allowed to be woken up in the WUR mode and that is in the first link set.

2. The method according to claim 1, wherein the first WUR setup response frame comprises information about a second link set, and the second link set comprises one or more links allowed to be woken up in the WUR mode.

3. The method according to claim 1 or 2, wherein the first WUR setup response frame further comprises wake up configuration information, and the wake up configuration information comprises a WUR ID of each link allowed to be woken up in the WUR mode.

4. The method according to any one of claims 1 to 3, wherein the first WUR setup response frame further comprises wake up configuration information, and the wake up configuration information comprises an ID of a WUR group to which each link allowed to be woken up in the WUR mode belongs.

5. The method according to any one of claims 1 to 4, wherein the method further comprises:
sending, by the station multi-link device, a second WUR setup request frame to the access point multi-link device, wherein the second WUR setup request frame comprises information for requesting addition of one or more links to be woken up in the WUR mode, or the second WUR setup request frame comprises information for requesting removal of one or more links to be woken up in the WUR mode; and
receiving, by the station multi-link device, a second WUR setup response frame sent by the access point multi-link device, wherein the second WUR setup response frame indicates successful addition, and the second WUR setup response frame comprises information for allowing addition of the one or more links to be woken up in the WUR mode; or the second WUR setup response frame indicates successful removal, and the second WUR setup response frame comprises information for allowing removal of the one or more links to be woken up in the WUR mode.

6. The method according to claim 5, wherein when the second WUR setup response frame indicates successful addition, the second WUR setup response frame further comprises wake up configuration information comprising a WUR ID and/or an ID of a WUR group of the one or more links that are to be woken up in the WUR mode and that are allowed to be added.

7. The method according to any one of claims 1 to 6, wherein the method further comprises:
receiving, by the station multi-link device, a third WUR setup request frame sent by the access point multi-link device, wherein the third WUR setup request frame comprises information for requesting addition of one or more links to be woken up in the WUR mode, or the third WUR setup request frame comprises information for requesting removal of one or more links to be woken up in the WUR mode; and
sending, by the station multi-link device, a third WUR setup response frame to the access point multi-link device, wherein the third WUR setup response frame indicates successful addition, and the third WUR setup response frame comprises information for allowing addition of the one or more links to be woken up in the WUR mode; or the third WUR setup response frame indicates successful removal, and the third WUR setup response frame comprises information for allowing removal of the one or more links to be woken up in the WUR mode.

8. A multi-link device communication method, wherein the method comprises:
receiving, by an access point multi-link device, a first wake up radio WUR setup request frame sent by a station multi-link device, wherein the first WUR setup request frame is used to request setup of a WUR mode with the access point multi-link device, the first WUR setup request frame comprises information about a first link set, and the first link set comprises one or more links requested to be woken up in the WUR mode; and
sending, by the access point multi-link device, a first WUR setup response frame to the station multi-link device, wherein the first WUR setup response frame indicates successful setup of the WUR mode between the access point multi-link device and the station multi-link device, the first WUR setup response frame comprises indication information, and the indication information indicates a link that is allowed to be woken up in the WUR mode and that is in the first link set.

9. The method according to claim 8, wherein the first WUR setup response frame comprises information about a second link set, and the second link set comprises one or more links allowed to be woken up in the WUR mode.

10. The method according to claim 8 or 9, wherein the first WUR setup response frame further comprises wake up configuration information, and the wake up configuration information comprises a WUR ID of each link allowed to be woken up in the WUR mode.

11. The method according to any one of claims 8 to 10, wherein the first WUR setup response frame further comprises wake up configuration information, and the wake up configuration information comprises an ID of a WUR group to which each link allowed to be woken up in the WUR mode belongs.

12. The method according to any one of claims 8 to 11, wherein the method further comprises:
receiving, by the access point multi-link device, a second WUR setup request frame sent by the station multi-link device, wherein the second WUR setup request frame comprises information for requesting addition of one or more links to be woken up in the WUR mode, or the second WUR setup request frame comprises information for requesting removal of one or more links to be woken up in the WUR mode; and
sending, by the access point multi-link device, a second WUR setup response frame to the station multi-link device, wherein the second WUR setup response frame indicates successful addition, and the second WUR setup response frame comprises information for allowing addition of the one or more links to be woken up in the WUR mode; or the second WUR setup response frame indicates successful removal, and the second WUR setup response frame comprises information for allowing removal of the one or more links to be woken up in the WUR mode.

13. The method according to claim 12, wherein when the second WUR setup response frame indicates successful addition, the second WUR setup response frame further comprises wake up configuration information comprising a WUR ID and/or an ID of a WUR group of the one or more links that are to be woken up in the WUR mode and that are allowed to be added.

14. The method according to any one of claims 8 to 13, wherein the method further comprises:
sending, by the access point multi-link device, a third WUR setup request frame to the station multi-link device, wherein the third WUR setup request frame comprises information for requesting addition of one or more links to be woken up in the WUR mode, or the third WUR setup request frame comprises information for requesting removal of one or more links to be woken up in the WUR mode; and
receiving, by the access point multi-link device, a third WUR setup response frame sent by the station multi-link device, wherein the third WUR setup response frame indicates successful addition, and the third WUR setup response frame comprises information for allowing addition of the one or more links to be woken up in the WUR mode; or the third WUR setup response frame indicates successful removal, and the third WUR setup response frame comprises information for allowing removal of the one or more links to be woken up in the WUR mode.

15. A communication device, comprising a processor, and a memory and a communication interface that are separately coupled to the processor, wherein the communication interface is configured to communicate with another device; and the processor is configured to: run instructions or a program in the memory, and perform, through the communication interface, the method according to any one of claims 1 to 14.

16. A computer-readable storage medium, wherein the computer-readable storage medium stores instructions, and when the instructions are run on a computer, the computer is enabled to perform the method according to any one of claims 1 to 14.

17. A computer program product comprising instructions, wherein when the instructions are run on a computer, the computer is enabled to perform the method according to any one of claims 1 to 14.
